# EUROPÄISCHE PATENTSCHRIFT

(11) **EP 0 930 252 B1**
(45) Veröffentlichungstag und Bekanntmachung des Hinweises auf die Patenterteilung: **24.03.2004**
(21) Anmeldenummer: 98250447.4
(22) Anmeldetag: 23.12.1998
(51) Int. Cl.: B65G 39/071, B65H 27/00

(54) **Förderer für Stückgut**
Conveyor for articles
Convoyeur pour des articles

(30) Priorität: 15.01.1998 DE 19801823
(43) Veröffentlichungstag der Anmeldung: 21.07.1999
(73) Patentinhaber: Siemens Aktiengesellschaft, 80333 München (DE)
(72) Erfinder: Kratz, Helmut, 63110 Rodgau (DE); Bonifer, Edgar, Dipl.-Ing., 64839 Münster (DE); Jahns, Werner, Dipl.-Ing., 63500 Seligenstadt (DE)

(56) Entgegenhaltungen:
- WO-A-94/04850
- DE-B- 1 177 913
- US-A- 3 122 935
- US-A- 5 213 202

## Beschreibung

Die Erfindung betrifft einen Förderer für Stückgut, insbesondere für biegeschlaffes Stückgut wie Zeitungen, Textilien oder Säcke, gemäß dem Oberbegriff des Anspruchs 1.

Aus der US Patentschrift 5,213,202 ist ein Gurtförderer der eingangs beschriebenen Art bekannt, bei dem die endlosen und in Förderrichtung verlaufenden Gurte um Rollen geführt werden,in deren die Gurte tragende Oberfläche bogen- oder fischgrätenförmigen Nuten eingeformt sind. Die Nuten dienen dazu, die Zug- und Spurführungseigenschaften der Rollen zu verbessern, sie sollen insbesondere ein Durchrutschen der Gurte verhindern. Das Einbringen der Nuten ist aufwändig und verteuert die Rollen deutlich. Außerdem werden die Gurte auf der unebenen Lauffläche stark verschleißen, so dass Störungen des Betriebes zu erwarten sind. Teure Rollen und häufiger Gurtwechsel durch den zu erwartenden Verschleiß beeinträchtigen die Wirtschaftlichkeit des bekannten Förderers.

Aus der internationalen Offenlegungsschrift WO94/04850 ist bereits eine Rollenförderbahn für biegeschlaffes Stückgut, wie z. B. Handtücher, bekannt. Die Rollenförderbahn besteht im wesentlichen aus einer Vielzahl von in Förderrichtung hintereinander sowie parallel zueinander angeordneten Rollen, die eine weitestgehend horizontale Transportfläche für das Stückgut bilden. Um zu vermeiden, daß das biegeschlaffe Stückgut zwischen die mit Abstand aufeinanderfolgenden Rollen gezogen wird oder hindurchfällt, werden um jeweils eine Gruppe von aufeinanderfolgenden Rollen mehrere schmale endlos umlaufende Gurtstreifen geführt. Hierbei sind die Gurte in Förderrichtung gesehen nebeneinander angeordnet. Die Freiräume zwischen den Rollen werden hierdurch netzartig verschlossen.

Damit die schmalen Gurte gleichmäßig auf den Rollen verteilt und parallel zueinander ablaufen, werden diese von doppelkegelförmigen Abschnitten der ansonsten zylinderförmigen Rolle geführt. Eine entsprechende Anzahl von kegelförmigen Abschnitten ist somit entlang der Längsrichtung der Rolle beabstandet durch zylinderförmige Abschnitte der Rolle verteilt. Da die schmalen Gurte dazu neigen, die ansteigenden Kegelflächen der doppelkegelförmigen Abschnitte hinaufzuwandern, werden die Gurte durch die gegenläufig ansteigenden Kegelflächen in bezug auf die höchste Stelle der aneinandergrenzenden Kegelflächen zentriert. Da die doppelkegelförmigen Abschnitte spiegelsymmetrisch zu einer durch die höchste Stelle verlaufenden vertikalen Ebene ausgebildet sind, wird jeder Gurt mittig auf einem kegelförmigen Abschnitt zentriert. Die zylindrischen Abschnitte der Rolle zwischen den doppelkegelförmigen Abschnitten weisen in Förderrichtung der Rollenförderbahn gesehen eine Breite auf, die größer ist als die Breite der Gurte. Die Breite der kegelförmigen Abschnitte entspricht in etwa der Breite des Gurtes.

Bei dieser Rollenförderbahn kann durch eine Ablenkung des Gurtes, insbesondere durch das Stückgut, dieser von dem doppelkegelförmigen Abschnitt in Richtung des zylinderförmigen Abschnittes hinuntergedrückt werden kann. Da der zylinderförmige Abschnitt breiter als der Gurt ist, verbleibt der Gurt in dieser Position, in der er das Stückgut nicht wirksam unterstützt wird. Da zwischen den zylinderförmigen und doppelkegelförmigen Abschnitten zusätzlich ein Absatz vorhanden ist, wird auch ein selbsttätiges Hinaufwandern des Gurtes auf den doppelkegelförmigen Abschnitt verhindert. Um den Gurt wieder ordnungsgemäß auszurichten, muß ein manueller Eingriff in den laufenden Betrieb des Förderers erfolgen.

Der vorliegenden Erfindung liegt die Aufgabe zugrunde, einen Förderer für Stückgut, insbesondere für biegeschlaffes Stückgut wie Zeitungen, Textilien oder Säcke, zu schaffen, der eine verminderte Störanfalligkeit aufweist.

Diese Aufgabe wird bei einem Förderer für Stückgut, insbesondere für biegeschlaffes Stückgut wie Zeitungen, Textilien oder Säcke, durch die im Anspruch 1 aufgeführten Merkmale gelöst.

Vorteilhafte Ausgestaltungen der Erfindung sind in den Unteransprüchen 2 bis 6 angegeben.

Lösungsgemäß wird durch eine spezielle Ausbildung der Durchmesser und in Förderrichtung gesehen der Breite der sich ausgehend von einer höchsten Stelle mit einem maximalen Durchmesser beidseitig in Längsrichtung der Rolle gesehen verjüngenden und konvexförmig ausgebildeten Abschnitte der Rollen, die sich mit zylinderförmigen Abschnitten abwechseln, in Abstimmung mit der Dicke des Gurtes erreicht, daß bei Ablenkung eines Gurtes durch Stückgut von der höchsten Stelle des sich verjüngenden Abschnittes in Richtung des zylinderförmigen Abschnittes dieser Gurt den Kontakt zu dem Stückgut verliert und somit vor Erreichen des benachbarten sich verjüngenden Abschnittes sich in einer noch auf dem sich verjüngenden Abschnitt aufliegenden Position stabilisieren kann. Nach Weitertransport des Stückgutes kann der Gurt selbsttätig wieder zu der höchsten Stelle des erweiterten Abschnittes wandern. Hindurch wird die Rollenförderbahn störunanfällig gegen von außen auf die Gurte und quer zur Förderrichtung wirkende Kräfte.

Diese Selbstzentrierung der schmalen Gurte nach Ablenkung in Richtung der zylindrischen Abschnitte wird vorteilhafterweise durch Rollen erreicht, deren sich verjüngende Abschnitte in Förderrichtung gesehen eine Breite aufweisen, die mindestens doppelt so groß ist wie die Breite des Gurtes, deren zylinderförmige Abschnitte der Rollen in Förderrichtung gesehen eine Breite aufweisen, die kleiner ist als die Breite des Gurtes und hierbei die Durchmesser der sich verjüngenden Abschnitte der Rollen um mindestens die doppelte Dicke des Gurtes größer als der Durchmesser der zylinderförmigen Abschnitte der Rollen ist. Hierdurch wird erreicht, daß der Gurt bei Ablenkung in Richtung der zylinderförmigen Abschnitte durch seine Bewegung entlang der in Richtung des zylinderförmigen Abschnittes abfallenden Fläche des sich verjüngenden Abschnittes so weit unter dem Stückgutteil abtauchen kann, daß der Gurt hierzu seinen Kontakt verliert. Dadurch wird der ablenkende Einfluß auf den schmalen Gurt unterbunden, so daß dieser sich in der in Richtung des zylinderförmigen Abschnittes abgelenkten Position zunächst stabilisieren kann und nicht weiter in Richtung des zylinderförmigen Abschnittes wandert und anschließend, nachdem das Stückgutteil diesen Abschnitt des Förderers verlassen hat, wieder selbsttätig auf die höchste Stelle des sich verjüngenden Abschnittes hinaufwandert. Dieses Zurückwandern der Gurte funktioniert nur, wenn die von dem Stückgut auf den Gurt aufgebrachten Kräfte durch die Abtauchbewegung des Gurtes unterbrochen bzw. vermindert werden, bevor dieser über den zylindrischen Abschnitt hinweg in Richtung des angrenzenden weiteren sich verjüngenden Abschnittes geschoben wurde. Dies ist jedoch durch die Differenz der Durchmesser des sich verjüngenden Abschnittes und des zylinderförmigen Abschnittes sichergestellt und gleichzeitig das Stückgut durch die benachbarten Gurte abgetragen wird.

Desweiteren erweist sich als vorteilhaft, die Breite der zylinderförmigen Abschnitte kleiner als die Breite des Gurtes zu wählen, wodurch ausgeschlossen wird, daß ein in Richtung der zylinderförmigen Abschnitte abgelenkter Gurt anschließend auf den zylinderförmigen Abschnitten verharrt, ohne in Richtung der sich verjüngenden Abschnitte zurückzuwandern. Die Größenverhältnisse der verschiedenen Abschnitte sind so gewählt, daß im abgelenkten Zustand der Gurt den Kontakt zu dem sich verjüngenden Abschnitt behält und somit hieraus die Antriebskraft für das Zurückwandern zur höchsten Stelle des sich verjüngenden Abschnittes resultiert.

In konstruktiver Ausgestaltung der Rolle hat es sich als vorteilhaft erwiesen, die Breite der sich verjüngenden Abschnitte mit mindestens der fünffachen Breite der Gurte zu bemessen, wodurch eine stabile Zentrierung des Gurtes im Bereich der höchsten Stelle des sich verjüngenden Abschnittes erreicht wird, da die in Richtung der höchsten Stelle auf den Gurt einwirkenden Kräfte durch eine geringere Steigung der sich verjüngenden Flächen betragsmäßig klein gehalten werden können. Um im Gegenzug ein Abtauchen des Gurtes bei Ablenkung durch das Stückgut zu ermöglichen, ist in entsprechender Weise eine breitere Ausgestaltung des sich verjüngenden Abschnittes erforderlich. Die breitere Ausgestaltung des sich verjüngenden Abschnittes hat auch den Effekt, daß die Strecke für die Ablenkung des Gurtes und somit auch die hierfür benötigte Zeit verlängert wird, so daß der Einfluß des weitertransportieren Stückgutteils vor Erreichen des zylinderförmigen Abschnittes durch den Gurt beendet ist. Außerdem wird ein Abtauchen des Gurtes vereinfacht, wenn der Durchmesser der sich verjüngenden Abschnitte mindestens um den 2,5-fachen Betrag der Dicke des Gurtes größer ist als der Durchmesser der zylinderischen Abschnitte der Rolle.

Für die Ausbildung des sich verjüngenden Abschnittes hat sich die doppelkegelige Form als vorteilhaft erwiesen, wobei im Bereich der aneinandergrenzenden Kegelflächen und somit im Bereich der höchsten Stelle die Kegelflächen zur Schonung des Gurtes mit einem Radius ineinander übergehen. Eine ballige Ausführung ist auch möglich. Die schmalen Gurte weisen vorteilhafterweise einen rechteckigen Querschnitt auf.

Die Erfindung wird nachfolgend anhand eines in Zeichnungen dargestellten Ausführungsbeispiels näher beschrieben. Es zeigen:
- Figur 1: einen Querschnitt eines Förderers mit einer Ansicht einer Rolle mit Gurten und
- Figur 2: eine Ausschnittsvergrößerung von Figur 1 aus dem Bereich eines sich verjüngenden und angrenzenden zylinderförmigen Abschnittes der Rolle.

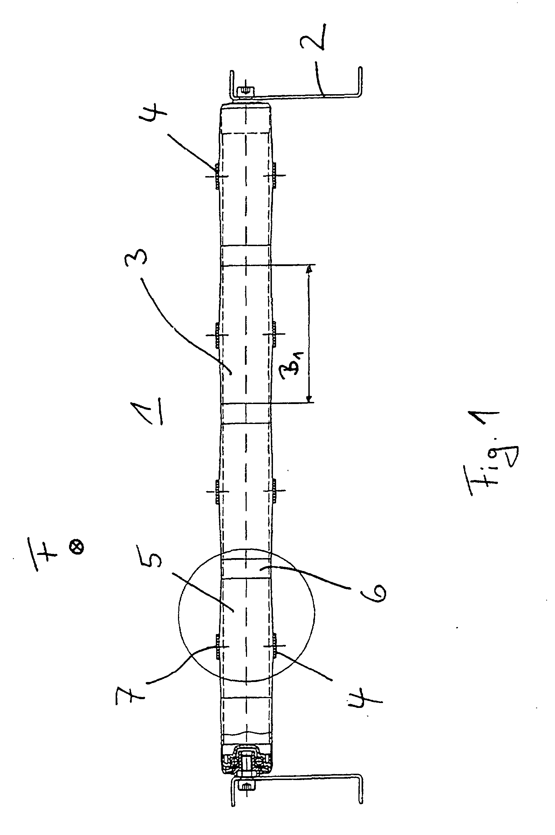

Figur 1 zeigt einen Querschnitt eines Förderers 1 für biegeschlaffes Stückgut wie Zeitungen, Textilien oder Säcke, der im wesentlichen aus zwei in Förderrichtung F-die senkrecht und in Richtung der Zeichenebene ausgerichtet ist- verlaufende Seitenrahmen 2, die als aufrechtstehende und u-förmige Blechteile ausgebildet sind, und zwischen den Seitenrahmen 2 gelagerten Rollen 3 besteht. Die Rollen 3 sind jeweils parallel zueinander, in Förderrichtung F gesehen mit Abstand hintereinander sowie quer zur Förderrichtung F ausgerichtet und bilden eine horizontale Förderfläche. Um zu vermeiden, daß das biegeschlaffe Stückgut zwischen die Rollen 3 gerät, sind um eine Gruppe von beispielsweise sechs aufeinanderfolgenden Rollen 3 vier endlos umlaufende schmale Gurte 4 geführt, die jeweils in Förderrichtung F verlaufen und mit seitlichem Abstand zueinander entlang der Längsrichtung L der Rollen 3 verteilt sind.

Zur Führung der Gurte 4 sind sich ausgehend von einer höchsten Stelle 7 mit einem maximalen Durchmesser D₁ beidseitig in Längsrichtung der Rolle 3 gesehen sich verjüngende Abschnitte 5 der Rollen 3 vorgesehen, die vorzugsweise doppelkegelförmig ausgebildet sind. Die sich verjüngenden Abschnitte 5 sind in Längsrichtung L mit der Rolle 3 gesehen jeweils von zylinderförmigen Abschnitten 6 voneinander getrennt. Die sich verjüngenden Abschnitte 5 und zylinderförmigen Abschnitte 6 wechseln sich somit in Längsrichtung L gesehen miteinander ab. Die sich verjüngenden Abschnitte 5 sind doppelkegelförmig ausgebildet, d. h. sie sind aus zwei Kegelstümpfen aufgebaut, deren Grundflächen mit dem größeren Durchmesser aneinandergrenzen. Im Bereich der aneinander angrenzenden Kegelstümpfe weist der sich verjüngende Abschnitt 5 seinen größten Durchmesser D₁ auf und somit die höchste Stelle 7 der durch die auf den sich verjüngenden Abschnitten 5 umlaufenden Gurte 4 gebildeten Förderfläche. Die sich verjüngenden Abschnitte 5 sind zu einer durch die höchste Stelle 7 gedachten vertikalen Ebene spiegelsymmetrisch ausgebildet. Durch diese Ausbildung der sich verjüngenden Abschnitte 5 wird erreicht, daß die Gurte 4 sich selbsttätig im Bereich der höchsten Stelle 7 des sich verjüngenden Abschnittes 5 zentrieren, da in diesem Abschnitt die Umfangsgeschwindigkeit der Rolle 3 am höchsten ist und entlang der Kegelflächen in Richtung der höchsten Stelle 7 die Umfangsgeschwindigkeiten leicht ansteigen und somit der Gurt 4 entlang der Kegelflächen des sich verjüngenden Abschnittes 5 in Richtung der höchsten Stelle 7 wandert. Da die von den Kegelflächen der sich verjüngenden Abschnitte 5 auf den Gurt 4 einwirkenden Kräfte gegeneinander gerichtet sind, verharrt der Gurt im Bereich der höchsten Stelle 7.

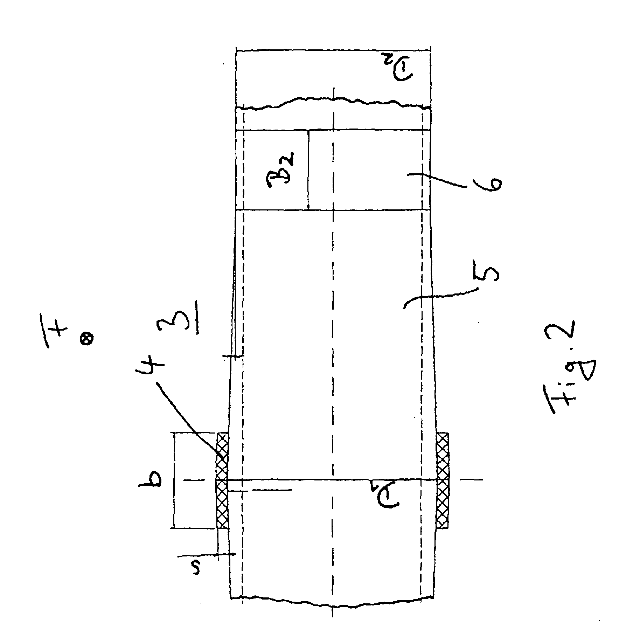

Die Figur 2 zeigt eine Ausschnittsvergrößerung von Figur 1 aus dem Bereich eines sich verjüngenden Abschnittes 5 und eines angrenzenden zylinderförmigen Abschnittes 6 einer Rolle 3. Anhand dieser Figur werden die Abmessungen der Abschnitte 5 und 6 in Abhängigkeit von der Dicke s des Gurtes 4 näher erläutert. Diese Abmessungen sind so gewählt, daß ein von einem Stückgutteil in Richtung eines zylindrischen Abschnittes 6 von seiner höchsten Stelle 7 abgelenkten Gurtes 4 wieder in Richtung der höchsten Stelle 7 zurückkehrt. Um dies zu erreichen, weist der sich verjüngende Abschnitt 5 im Bereich seiner höchsten Stelle 7 einen Durchmesser D₁ auf, der mindestens um die doppelte Dicke s des Gurtes 4 größer ist als der Durchmesser des zylinderförmigen Abschnittes D₂. Durch diese Ausbildung wird erreicht, daß bei Ablenkung des Gurtes 4 durch ein Stückgutteil in Richtung des zylinderförmigen Abschnittes 6 das Stückgutteil zunehmend auf den anderen Gurten 4 sowie der höchsten Stelle 7 des nun freigewordenen sich verjüngenden Abschnittes 5 abgestützt wird und den Kontakt mit dem Gurt 4 verliert. Der Gurt 4 befindet sich somit immer noch zumindest teilweise auf der Kegelfläche des sich verjüngenden Abschnittes 5 und kann sich in dieser Lage zunächst stabilisieren, da er nicht mehr weiter von dem Stückgutteil in Richtung des zylinderförmigen Abschnittes 6 verschoben wird.

Unterstützend wirkt noch, daß die Breite B₁ des sich verjüngenden Abschnittes 5 mindestens der fünffachen Breite b des Gurtes entspricht und somit der Gurt 4 eine relativ lange Strecke in Richtung des zylinderförmigen Abschnittes 6 abgelenkt werden muß, um diesen in Richtung des angrenzenden sich verjüngenden Abschnittes 5 zu schieben. Zur Überwindung dieser Strecke benötigt der Gurt 4 jedoch durch die Breite B₁ des sich verjüngenden Abschnittes 5 ausreichend Zeit, die bei dem gleichzeitig in Förderrichtung F geförderten Stückgutteil nicht vorhanden ist. Diese spezielle Ausbildung der sich verjüngenden Abschnitte 5 ermöglicht somit ein Zurückkehren des Gurtes 4 auf die höchste Stelle 7, nachdem er von einem Stückgutteil in Richtung eines zylinderförmigen Abschnittes 6 abgelenkt wurde.

Desweiteren ist vorgesehen, daß der zylinderförmige Abschnitt 6 in Förderrichtung F gesehen eine Breite B₂ aufweist, die kleiner ist als die Breite b des Gurtes 4. Hierdurch wird erreicht, daß ein in Richtung des zylinderförmigen Abschnittes 6 abgelenkter Gurt 4 immer noch im Kontakt mit einer Kegelfläche eines sich verjüngenden Abschnittes 5 ist und somit nicht im Bereich eines zylinderförmigen Abschnittes 6 verharrt, sondern zurück in Richtung einer höchsten Stelle 7 wandert. Außerdem ist im Bereich der aneinandergrenzenden Kegelflächen des sich verjüngenden Abschnittes 5 zur Laufberuhigung des Gurtes 4 ein Radius r für den Übergang zwischen den Flächen vorgesehen.

In einem Ausführungsbeispiel haben die Maßangaben die folgenden Werte: D₁= 53mm, D₂ = 49 mm, B₁ = 140 mm, B₂ = 20 mm, b = 25 mm und s = 1,4 mm. Es ist zu erkennen, daß D₁ etwa um den fast dreifachen Betrag von s größer ist als D₂. Somit ist auch bei biegeschlaffen Fördergut ein Zurückwandern des Gurtes 4 nach erfolgter Ablenkung gewährleistet.

### Bezugszeichenliste

- 1: Förderer
- 2: Seitenrahmen
- 3: Rollen
- 4: Gurt
- 5: sich verjüngender Abschnitt
- 6: zylinderförmiger Abschnitt
- 7: höchste Stelle
- F: Förderrichtung
- L: Längsrichtung
- D₁: Durchmesser von 5 im Bereich 7
- D₂: Durchmesser von 6
- s: Dicke von 4
- B₁: Breite von 5
- B₂: Breite von 6
- b: Breite von 4
- r: Radius

## Patentansprüche

1. Förderer für Stückgut, insbesondere für biegeschlaffes Stückgut wie Zeitungen, Textilien oder Säcke, mit einer Vielzahl von quer zur Förderrichtung (F), in Förderrichtung (F) hintereinander, parallel zueinander und voneinander beabstandet angeordneten und eine Förderfläche bildenden Rollen (3) mit in deren Längsrichtung sich abwechselnden zylinderförmigen Abschnitten (6) und sich von einer höchsten Stelle (7) mit maximalem Durchmesser (D₁) beidseitig in Längsrichtung der Rolle (3) gesehen sich zu den zylinderförmigen Abschnitten (6) verjüngenden Abschnitten (5) und mit jeweils um die erweiterten Abschnitte (5) einer Gruppe der Rollen (3) geführten, endlosen und in Förderrichtung (F) verlaufenden Gurten (4) zur Überbrückung der Freiräume zwischen den Rollen (3),
**dadurch gekennzeichnet,**
**daß** die sich verjüngenden Abschnitte (5) der Rollen (3) in Förderrichtung (F) gesehen eine Breite (B₁) aufweisen, die mindestens doppelt so groß ist wie die Breite (b) des Gurtes (4), die zylinderförmigen Abschnitte (6) der Rollen (3) in Förderrichtung (F) gesehen eine Breite (B₂) aufweisen, die kleiner ist als die Breite (b) des Gurtes (4), und der Durchmesser (D₁) der sich verjüngenden Abschnitte (5) der Rollen (3) um mindestens die doppelte Dicke (s) des Gurtes (4) größer als der Durchmesser (D₂) der zylinderförmigen Abschnitte (6) der Rollen (3) ist, so dass bei Ablenkung eines Gurtes (4) durch Stückgut von der höchsten Stelle (7) des sich verjüngenden Abschnittes (5) in Richtung des zylinderförmigen Abschnittes (6) dieser Gurt (4) den Kontakt zu dem nun auf den benachbarten Gurten (4) oder der höchsten Stelle (7) der Rolle (3) aufliegenden Stückgutes verliert und somit vor Erreichen des benachbarten sich verjüngenden Abschnittes (5) und nach Weitertransport des Stückgutes selbsttätig wieder durch den durchgehend bestandenen Kontakt zu dem sich verjüngenden Abschnitt (5) in Richtung dessen höchsten Stelle (7) des sich verjüngenden Abschnitt (5) wandert.

2. Förderer nach Anspruch 1,
**dadurch gekennzeichnet,**
**daß** die Breite (B₁) der sich verjüngenden Abschnitte (5) der Rollen (3) mindestens die fünffache Breite (b) des Gurtes (4) aufweist.

3. Förderer nach Ansprüche 1 und 2,
**dadurch gekennzeichnet,**
**daß** der Durchmesser (D₁) der sich verjüngenden Abschnitte (5) der Rollen (3) um mindestens die 2,5-fache Dicke (s) des Gurtes (4) größer als der Durchmesser (D₂) der zylinderförmigen Abschnitte (6) der Rollen (3) ist.

4. Förderer nach einem oder mehreren der Ansprüche 1 bis 3,
**dadurch gekennzeichnet,**
**daß** die sich verjüngenden Abschnitte (5) der Rollen (3) als Doppelkegel ausgebildet sind, deren an der höchsten Stelle (7) des sich verjüngenden Abschnittes (5) aneinandergrenzenden Kegelflächen über einen Radius (r) ineinander übergehen.

5. Förderer nach einem oder mehreren der Ansprüche 1 bis 4,
**dadurch gekennzeichnet,**
**daß** der Gurt (4) einen flachen und rechteckigen Querschnitt aufweist.

## Claims

1. Conveyor for articles, in particular for non-rigid articles such as newspapers, textiles or bags, having a multiplicity of rollers (3) which are arranged transversely to the conveying direction (F), are spaced apart parallel to one another and one behind the other, as seen in the conveying direction (F), form a conveying surface and have longitudinally alternating cylindrical sections (6) and sections (5) which taper on both sides, as seen in the longitudinal direction of the roller (3), from a highest point (7) with maximum diameter (D₁) to the cylindrical sections (6), and having endless belts (4) which are each guided around the widened sections (5) of a group of rollers (3), run in the conveying direction (F) and are intended for bridging the free spaces between the rollers (3), **characterized in that** the tapering sections (5) of the rollers (3) have a width (B₁), as seen in the conveying direction (F), which is at least double the width (b) of the belt (4), the cylindrical sections (6) of the rollers (3) have a width (B₂), as seen in the conveying direction (F), which is smaller than the width (b) of the belt (4), and the diameter (D₁) of the tapering sections (5) of the rollers (3) is larger, by at least double the thickness (s) of the belt (4), than the diameter (D₂) of the cylindrical sections (6) of the rollers (3), with the result that, when a belt (4) is deflected by articles in the direction of the cylindrical section (6) from the highest point (7) of the tapering section (5), this belt (4) loses contact with the articles, now resting on the adjacent belts (4) or the highest point (7) of the roller (3), and thus, before reaching the adjacent tapering section (5) and following further transportation of the articles, automatically moves back, as a result of the continuous contact with the tapering section (5), in the direction of the highest point (7) of the tapering section (5).

2. Conveyor according to Claim 1, **characterized in that** the width (B₁) of the tapering sections (5) of the rollers (3) is at least five times the width (b) of the belt (4).

3. Conveyor according to Claim 1 and 2, **characterized in that** the diameter (D₁) of the tapering sections (5) of the rollers (3) is larger, by at least 2.5 times the thickness (s) of the belt (4), than the diameter (D₂) of the cylindrical sections (6) of the rollers (3).

4. Conveyor according to one or more of Claims 1 to 3, **characterized in that** the tapering sections (5) of the rollers (3) are designed as double cones, of which the cone surfaces which are adjacent at the highest point (7) of the tapering section (5) merge into one another via a radius (r).

5. Conveyor according to one or more of Claims 1 to 4, **characterized in that** the belt (4) has a flat and rectangular cross section.

## Revendications

1. Convoyeur pour des marchandises, en particulier pour des marchandises souples comme des journaux, des produits textiles ou des sacs, comportant un grand nombre de rouleaux (3) qui sont disposés transversalement à la direction de convoyage (F), les uns derrière les autres en direction de convoyage (F) et parallèlement les uns aux autres selon un écart et qui forment une surface de convoyage, comportant dans leur direction de longueur des segments cylindriques (6) qui alternent et des segments qui se rétrécissent (5) des deux côtés quand on le regarde en direction de longueur du rouleau (3) par rapport aux segments cylindriques (6) à partir d'un point le plus élevé (7) d'un diamètre (D₁) maximal et comportant des courroies (4) sans fin qui sont guidées chacune autour des segments agrandis (5) d'un groupe de rouleaux (3) et qui s'étendent en direction de convoyage (F) pour surmonter les espaces libres entre les rouleaux (3), **caractérisé en ce que** les segments qui se rétrécissent (5) des rouleaux (3) quand on les voit en direction de convoyage (F) présentent une largeur (B₁) qui est au moins deux fois aussi grande que la largeur (b) de la courroie (4), les segments cylindriques (6) des rouleaux (3) quand on les voit en direction de convoyage (F) présentent une largeur (B₂) qui est plus petite que la largeur (b) de la courroie (4), et le diamètre (D₁) des segments qui se rétrécissent (5) des rouleaux (3) est plus grand au moins du double de l'épaisseur (s) de la courroie (4) que le diamètre (D₂) des segments cylindriques (6) des rouleaux (3), de sorte que lorsqu'une courroie (4) est déviée par une marchandise depuis le point le plus élevé (7) du segment qui se rétrécit (5) en direction du segment cylindrique (6), cette courroie (4) n'est plus en contact avec les marchandises qui reposent maintenant sur la courroie (4) voisine ou sur le point le plus élevé (7) des rouleaux (3) et donc se déplace en direction de son point le plus élevé (7) du segment qui se rétrécit (5) avant d'atteindre le segment qui se rétrécit (5) voisin et après que les marchandises ont été automatiquement transportées plus loin par le contact qui existe continuellement avec le segment qui se rétrécit (5).

2. Convoyeur selon la revendication 1, **caractérisé en ce que** la largeur (B₁) des segments qui se rétrécissent (5) des rouleaux (3) présente au moins cinq fois la largeur (b) de la courroie (4).

3. Convoyeur selon la revendication 1 et 2, **caractérisé en ce que** le diamètre (D₁) des segments qui se rétrécissent (5) des rouleaux (3) est plus grand d'au moins 2,5 fois l'épaisseur (s) de la courroie (4) que le diamètre (D2) des segments cylindriques (6) des rouleaux (3).

4. Convoyeur selon une ou plusieurs des revendications 1 à 3, **caractérisé en ce que** les segments qui se rétrécissent (5) des rouleaux (3) sont formés en tant que double cône dont les surfaces coniques qui se touchent au point le plus élevé (7) du segment qui se rétrécit (5) se transforment l'un en l'autre selon un rayon (r).

5. Convoyeur selon une ou plusieurs des revendications 1 à 4, **caractérisé en ce que** la courroie (4) présente une section transversale plate et rectangulaire.
